# EUROPEAN PATENT SPECIFICATION

(11) **EP 0 189 848 B1**
(45) Date of publication and mention of the grant of the patent: **03.03.1993**
(21) Application number: 86100895.1
(22) Date of filing: 23.01.1986
(51) Int. Cl.: G06F 11/00

(54) **Method and apparatus for software debugging**
Verfahren und Gerät zum Software-Austesten
Méthode et appareil de déverminage de logiciel

(30) Priority: 31.01.1985 US 699781
(43) Date of publication of application: 06.08.1986
(73) Proprietor: Hewlett-Packard Company, Palo Alto, California 94304 (US)
(72) Inventor: Hall, Kevin M., Colorado Springs Colorado 80915 (US); Schmelzer, Daniel A., Colorado Springs Colorado 80917 (US)
(74) Representative: KOHLER SCHMID + PARTNER

(56) References cited:
- EP-A- 0 084 431
- US-A- 4 338 660

## Description

The present invention generally relates to a method and an apparatus for software debugging and specifically to a method of acquiring data concerning the execution of software in a target system under test in accordance with the precharacterizing part of the independent claim 1 and an apparatus for performing this method in accordance with the precharacterizing part of the independent claim 4.

Such a method and an apparatus are known from EP-A-0 084 431.

An increasing number of products are incorporating microprocessors. Much of the development cost of these products is related to the testing and debugging of the programs executed by the microprocessor. Also, the performance of the resulting product may depend heavily upon the various design choices made and the skill employed in writing those programs. That programming may be in the form of firmware or software; as far as the description below is concerned the difference is moot, and such programming will hereinafter be referred to simply as software.

Any new product that relies heavily on software to accomplish its intended function goes through a development cycle during which designers depend on a variety of measurement tools (e. g., emulators, timing analyzers, logic state analyzers and the like) to test, debug, and analyze the product's performance. The instant invention is an additional measurement tool that aids designers in nearly every phase of the software development cycle. It can be used for software characterization, testing, debugging, and optimization, and can characterize software nonintrusively as that software executes in real time.

Traditionally, program performance has been measured in one of two ways: through in-program "hooks", which print out a short message every time the block of code in which they reside is executed, or by custom designed monitoring programs, which oversee the execution of the target code and measure the duration of execution. The main drawback of both traditional methods is that they are intrusive and affect real-time operation. In-program hooks lengthen the program under test and must be removed if the finished code is to fit in a restricted memory space.

Once removed, however, they are no longer available to monitor code execution. Therefore, for every debugging effort the hooks must be regenerated; a difficult and costly task. Similarly, program monitors, whether they be line-by-line tracers or event timers, add their own execution time to that of the program. As a consequence, they are not well suited to situations that require real detective work across a wide spectrum of module interaction. A further disadvantage of these traditional methods is that they must be specifically tailored to each measurement to be performed, a time consuming and possibly error prone programming task in itself.

Traditional methods suffered another disadvantage in that they are not well suited to debugging or analyzing programs written in high level languages such as C and PASCAL. The programmer must do several hierarchy translations to bridge the gap between the language in which the program is designed and the raw state flow level in which the analyzer is operated. The result is that the programmer has to think through the testing and debugging procedure in a different context from that in which the basic program was conceptualized and implemented.

The above mentioned EP-A-0 084 431 describes a software debugging analyzer monitoring the performance of a particular device in a data processing system in which the particular device and other devices are connected to a common bus monitoring the status, data and address signals to which access is granted on a priority basis. These data and address signals are compared with data and address bits which are set in condition registers by a microprocessor upon input signals from a terminal. Further, a cycle comparator determines whether or not the type of bus cycle which is occurring on the common bus disk of a type the information of which is to be recorded in a trace RAM.

The whole description of the EP-A-0 084 431 shows that the method is not well suited to debugging or analyzing programs written in high level languages and that in this prior art system the programmer must also do hierarchy translations with the specific disadvantages mentioned above.

US-A-4 338 660 describes in particular a relational break signal generating device which can monitor a program during its execution and cause the suspension of execution of that program and/or the initiation or termination of external processes when a prespecified program event occurs.

Thus, it is an object of the invention to provide a method and an apparatus for software debugging, which do not affect real-time operation and do not require any specific tayloring to each measurement performed.

According to the invention, this object is met by the method and apparatus as defined in the independent claims 1 and 4, respectively.

Dependent claims 2 to 3 characterize advantageous developments of the method specified in the independent claim 1, while dependent claims 5 and 6 characterize advantageous developments of the apparatus specified in the independent claim 4.

In performing the disclosed method, the software debugging analyzer disclosed herein performs real-time nonintrusive measurements. It greatly reduces the mismatch between the analyses and debugging capabilities of the measurement system and the level at which the program to be analyzed was conceptualized and implemented.

The debugging analyzer disclosed herein provides increases in the automation of software testing and debugging at three levels: automation of the software hierarchy translation; automation of the basic test and debug measurements; and automation of a series or sequence of measurements.

Data collection parameters are entered quickly and easily with directed-syntax softkeys. Symbols and labels generated in program assembly or compilation can be used directly in defining measurements. Measurement configurations are flexible, meeting a variety of application requirements. The debugging analyzer includes basic performance measurement capabilities, providing for testing of module/program timing and code execution specifications. These performance measurement capabilities are fundamental to aid the user's verification and validation activities for improved software reliability, as well as in the basic debug process. Timing measurements provide important improvements in the debug effort, opening up a third dimension to the user to provide a more comprehensive picture of the system being analyzed. Also, the performance metrics of the analyzer allow the user to accomplish performance analysis and code optimization activities. (E.g., not meeting a timing, occurrence, or space specification is a but). The software code and data measurement capabilities provide significant improvements to programmer productivity over present debug and analysis packages. All these measurements can be accessed via a highly leveraged automatic test management capability. And of extreme importance to improved accuracy and reduced uncertainty of these measurements, is the non-intrusive and real-time implementation of this instrumentation. These resources are presented to the user in an easy-to-use implementation, which is in alignment with the way software solutions are conceptualized, designed, implemented and maintained.

These and other aspects of the invention are achieved by a hybrid design with an optimized balance between hardware and software implementation, using hardware to provide real-time data acquisition, speed and nonintrusive measurement, and software to provide a flexible feature set.

Figure 1 is a simplified block diagram of a microprocessor development system which illustrates the connection of the proposed software debugging apparatus to a host system when this apparatus is configured as a plug-in option.

Figure 2 is a simplified block diagram of the information flow in the system of the invention.

Figures 3A, 3B and 3C are simplified block diagrams of the set of printed circuit boards incorporating the proposed apparatus when configured as a plug-in option to the host system as illustrated in Figure 1.

Figure 4 is a simplified block diagram which illustrates the components of a recognition comparator circuit used in the invention.

Figure 5 is a simplified block diagram which illustrates in greater detail the components of the X and Y measurement function generators shown in Figure 2.

Figure 6 is a simplified block diagram which illustrates in greater detail the components of the fast sequence function generator shown in Figure 2.

Figure 7 is an idealized flow diagram illustrating the operation of the analyzer for the trace modules measurement.

Figure 8 is an idealized flow diagram illustrating the operation of the analyzer for the trace data flow measurement.

Figure 9 is an idealized flow diagram illustrating the operation of the analyzer for the trace statements measurement.

Figure 10 is an idealized flow diagram illustrating the operation of the analyzer for the trace variables measurement.

Figure 11 is an idealized flow diagram illustrating the operation of the analyzer for the time modules measurement.

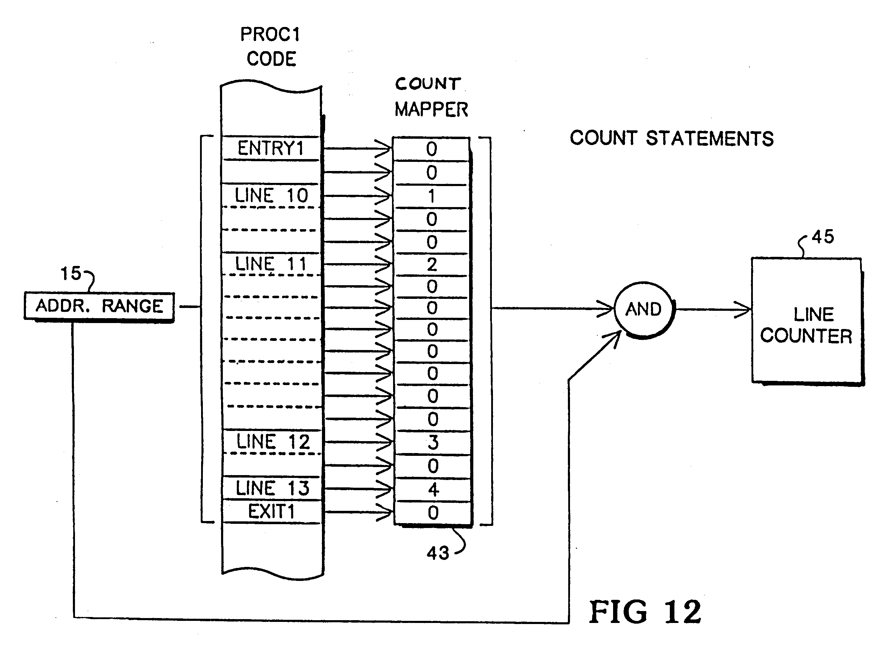

Figure 12 is an idealized flow diagram illustrating the operation of the analyzer for the count statements measurement.

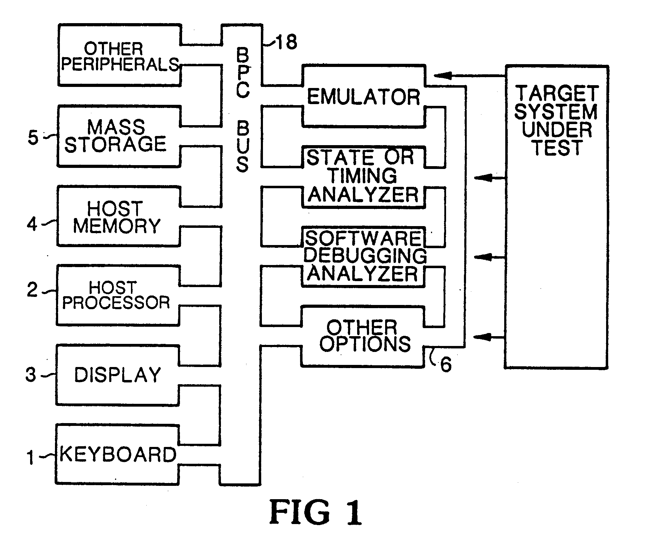

Figure 1 is a block diagram of a "microprocessor development system" that includes a keyboard 1 with a row of re-definable "soft keys" adjacent a CRT display 3. The apparatus also includes a host processor 2, memory 4 and a mass storage facility 5 (e.g., a hard disc drive) and is capable of receiving an extensive collection of options. Each option has one or more printed circuit boards that are interconnected with the host components via BPC bus 18. Generally each option also has some associated software which augments to an operating and measurement system already resident in the host system.

Among the options that may be installed in the microprocessor development system are emulators, cross compilers, logic state analyzers, timing analyzers, and the subject of the instant disclosure, a software debugging analyzer. The options are interconnected via intermodule bus 6. It will, of course, be understood by those skilled in the art that the invention need not be produced as an option to some other apparatus, but may equally well be implemented as a complete stand-alone measurement device, if desired. Nevertheless, since the invention was first produced as such an option, it will, as a matter of convenience, be described in that form.

In the present embodiment the software debugging analyzer consists of three p.c. boards and some accompanying software that are installed in the microprocessor development system. In one particular actual embodiment where the apparatus is a Hewlett-Packard model 64000 an emulator option must also be installed. In that case the connections for the plug-in p.c. boards are arranged so that the necessary signals from the target system under test are automatically coupled to the software debugging analyzer as the target software is executed with the emulator.

It would, of course, be equally possible to equip the software debugging analyzer with its own probes as well as signal acquisition and conditioning circuitry, so that it could be attached directly to an arbitrary processor executing the target software. While that would have certain advantages pertaining to flexibility, the scheme of automatic coupling to an emulator has the equally attractive advantage of allowing software performance analysis to proceed even before the hardware of the target system is complete.

Once the software debugging analyzer is installed and accessed, various re-definable definitions appear at the bottom of the CRT display. These definitions are associated with the row of re-definable soft keys. With the aid of these keys the user instructs the apparatus and its various options (including the software debugging analyzer in particular) concerning the measurements that are desired. This is accomplished via an interactive process involving "directed syntax," wherein the operating and measurement system dynamically varies the definitions of the soft keys as the user proceeds through the syntax of each command. In this way the user is continually presented with only valid choices, and is automatically instructed and guided in his selection of parameters for the various commands. In response to his commands the operating and measurement system writes various control values into registers in the option p.c. boards and elsewhere. That configures those elements of hardware to operate in the modes selected and to perform the desired measurements.

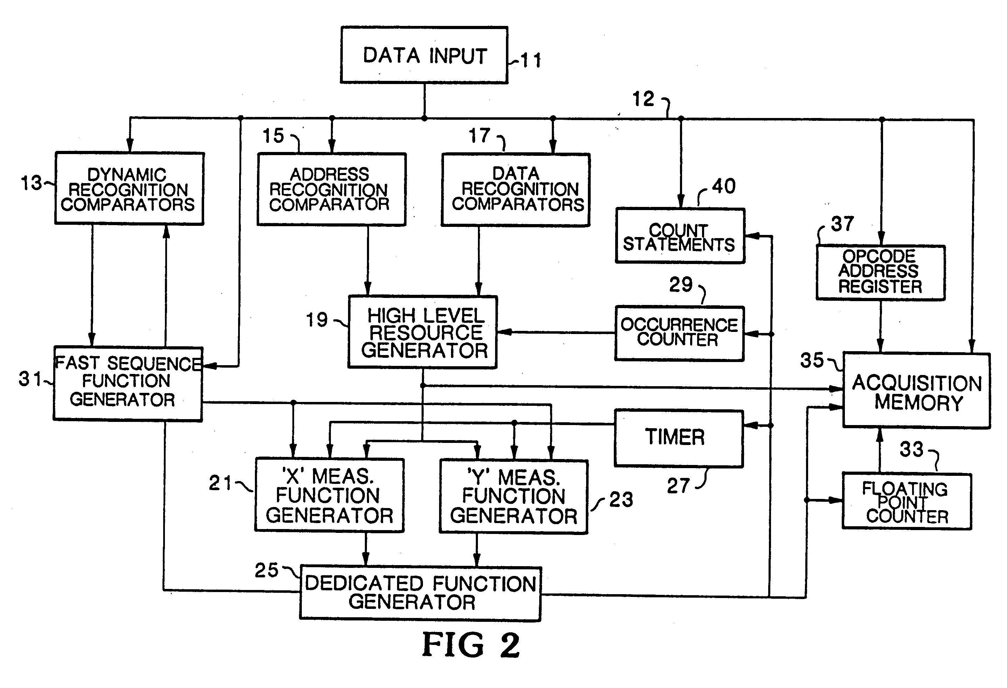

Figure 2 illustrates the information flow in the analyzer. Signals from the target system under test enter the software debugging analyzer via data input 11 to emulation bus 12. The input signals include address, data and status information from the target system. The address and status signals, which comprise 32 bits, are sent to dynamic recognition comparators 13 and address recognition comparators 15 and fast sequence generator 31. The data signals, which comprise 16 bits, are sent to data recognition comparators 17. The address, status and data signals also go to the acquisition memory 35 for selective storage as described below.

The address recognition comparators 15 are programmable to recognize target system signals which represent an event of interest in carrying out the chosen debugging analysis routine, i.e., whether a particular address or status is the same as or within a range of those chosen by the user. Similarly, the data recognition comparators 17 are programmable to recognize the target system data signals which are equal to or within a range of those chosen by the user.

The outputs from the address and data recognition comparators go to high level resource generator 19. The high level resource generator is programmable to determine the occurrence of a number of more complex events, i.e., combinations of multiple events recognized by the address and data recognition comparators.

The address and data recognition comparators and the high level resource generator thus provide two levels of event recognition logic. The flexibility of the event recognition circuits is thereby increased because low-level events and complex combinations of elementary events can be programmed separately. This also allows the low-level events recognition to be programmed more simply, because an event may be defined as a single address, status or data stream rather than a combination of them. A further advantage is that the output of high level resource generator 19 has a relatively high density of information, thus the next level of recognition logic can be used to perform more complex analyses.

The outputs of high level resource generator 19 go to two sequencers, X measurement function generator 21 and Y measurement function generator 23. These function generators are programmable to determine the occurrence of a sequence of the events represented by the outputs of high level resource generator 19. Additional inputs to function generators 21 and 23 come from timer 27 and fast sequence function generator 31, whose operation is described below. These additional inputs can also be employed in defining a sequence of events to be recognized.

The outputs of function generators 21 and 23 are sent to dedicated function generator 25, to produce any of a number of operating functions. Included are: start, timer count, timer load, occur, count, store, stop and search. The start function initiates a measurement episode and enables the other functions. Timer count and timer load control timer 27. The occur function is used to provide input to occurrence counter 29 which counts selected events for high level resource generator 19. The count function is used for input to floating point counter 33 whose output can be stored in acquisition memory 35 and as input to line counter 45 for counting line execution. The store function stores in acquisition memory 35 the address, data and status information currently on emulation bus 12, as well as the current value in floating point counter 33 and the current value in opcode address register 37. The stop function terminates a measurement episode. The search function is used for driving signals to external apparatus in the host system such as the other analyzers.

To summarize the operation of the event recognition system described so far: low-level event recognition is done by address and data recognition comparators 15 and 17; high-level event recognition -- complex event definitions -- is done by high level resource generator 19, and sequences of complex events are examined by function generators 21 and 23 to decide when a function is to be carried out by dedicated function generator 25. Timer 27 and occurrence counter 29 are controlled by dedicated function generator 25 and provide feedback input to high level resource generator 19 and measurement function generators 21 and 23.

The portion of the event recognition system shown on the left hand side of Figure 2, comprising dynamic recognition comparators 13 and fast sequence function generator 31, provides for recognition of events which involve dynamically activated variables. Typically, variables are assigned a memory location, or address, and any activity with respect to a variable can be tracked by watching that address. However, in some high-level programming languages, e.g., PASCAL, a variable may be assigned only a relative location, for example, a location relative to the top of a stack of local variables. In order to trace any activity with respect to such dynamically activated variables, the analyzer must keep track of where the top of the stack is and where the variable is located in the stack.

The dynamic recognition comparators 13 are programmable in real-time to recognize target system signals which represent the activation of variables and the stack location assigned to them. Fast sequence function generator 31 is programmable to interpret the output signals from the dynamic recognition comparators 13 and reprogram at least one of the dynamic comparators with the address range assigned to the dynamically activated variable. The outputs of fast sequence function generator 31 go to X and Y measurement function generators 21 and 23 and to dedicated function generator 25. Thus, when a dynamic comparator 13 detects access to a dynamic variable fast sequence function generator 31 can cause the current state on emulation bus 12 to be stored in acquisition memory 35.

The count statements circuit 40 counts the occurrences of a high level language instruction, based on signals received from the dedicated function generator 25 and from emulation bus 12.

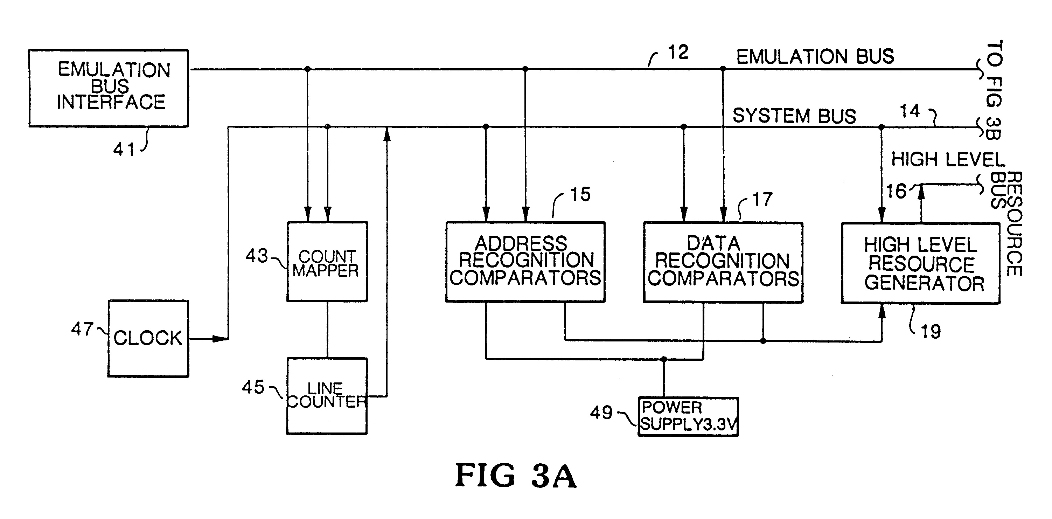

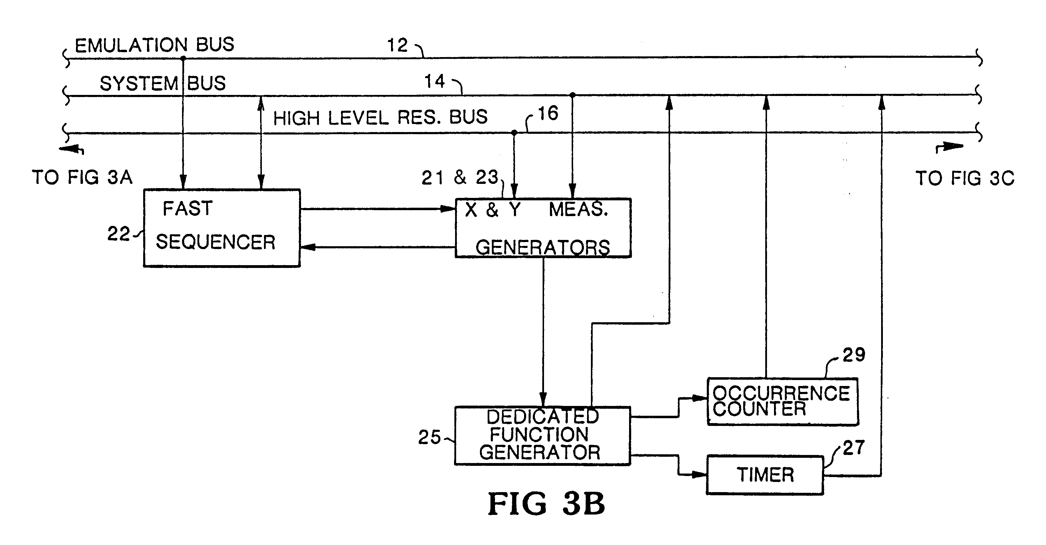

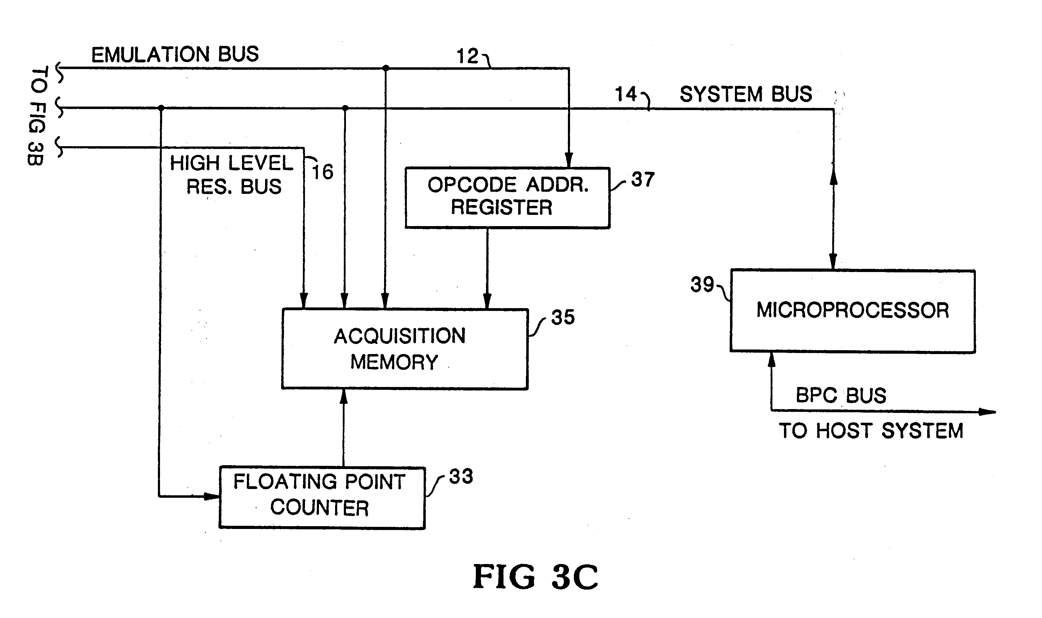

In the particular embodiment described herein, the software debugging analyzer is contained on three interconnected p.c. boards which are inserted into the host microprocessor development system. Figures 3A, 3B and 3C illustrate schematically the layout of circuitry on the three p.c. boards.

Referring to Figure 3A, the first p.c. board contains emulation bus interface 41 address recognition comparators 15, data recognition comparators 17, high level resource generator 19, count mapper 43 and line counter 45, clock 47 and power supply 49.

Emulation bus interface 41 provides an input port through which signals from the emulator enter the software debugging analyzer. The signals from the emulator are distributed to the appropriate circuits throughout the analyzer via emulation bus 12.

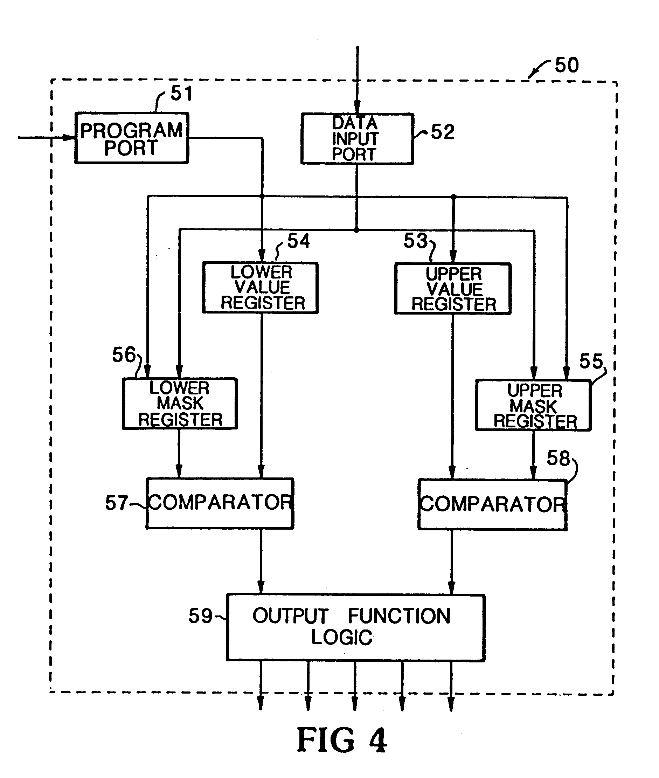

The address recognition comparators 15 and the data recognition comparators 17 are 32-bit comparators. Figure 4 shows a schematic block diagram of the components of the recognition comparators. The function of each comparator circuit 50 is to perform pattern and range recognition in a 1, 0, "don't care" manner on input data. Signals received at the program port 51 direct the 32-bit pattern received on the program input port 51 to one of four registers within the comparator. Each comparator has four 32-bit wide registers, an upper bound value register 53, a lower bound value register 54, an upper bound mask register 55 and a lower bound mask register 56. All of the registers can be loaded on the fly, although the mask registers 55 and 56 in address and data recognition comparators 15 and 17 are typically loaded before a measurement is made and not altered during the measurement. The upper and lower bound value registers 53 and 54 and the upper and lower bound mask registers 55 and 56 are loaded with the configuration of the data or address event to be recognized. Input data received via the emulator bus 12 through data input port 52 is compared with the configurations loaded into the mask and value registers. The outputs of the upper boundary value and mask registers are sent to comparator 57 to determine if the input value is less than or equal to, or just equal to, the event data. The outputs of the lower boundary value and mask registers are sent to comparator 58 to determine if the input value is greater than or equal to, or just equal to the event data.

Based on the output signals from comparators 57 and 58, output function logic 59 provides one or more of five outputs: data is equal to the upper boundary mask, data is less than or equal to the upper boundary mask, data is greater than or equal to the lower boundary mask, data is equal to the lower boundary mask, and data is in the range between the upper boundary mask and the lower boundary mask. Thus the comparators can operate in two modes, range recognition to determine if the input data or address is within a selected range, and equate recognition to detemine if the input data or address is the same as a selected configuration.

In the embodiment described, there are six address recognition comparators, two configured as address equate comparators and four configured as address range comparators. There are six data recognition comparators, four configured as data equate comparators and two configured as data range comparators. One of the address equate comparators is programmed to recognize the target system's "opcode fetch" instruction and to provide an output signal upon the occurrence of that instruction.

Returning to the description of components shown in Figure 3A, the high level resource generator 19 comprises an additional set of ten 32-bit comparator circuits. These comparators are similar in construction and operation to those used for the address and data recognition comparators 15 and 17, illustrated in Figure 4. The inputs for the high level resource generator circuits are the outputs of the recognition comparators 15 and 17 rather than signals from the target system. The high level resource generator 19 can be programmed to recognize ten combinations of outputs from the recognition comparators 15 and 17, to construct complex event definitions. The ten outputs are distributed as follows: four to X-function generator 21, four to Y-function generator 23 and two to both X and Y function generators. The output signals are sent to the function generators, which are on a different p.c. board, via high level resource bus 16.

Power supply 49 is a simple buck regulating switching power supply, to provide a source of 3.3V, 3.3A power for the recognition comparators 13, 15 and 17. Clock 47 is a 10Mhz clock generated from a 20Mhz clock whose output is divided by 2. The output pulses of clock 47 are distributed to various counters in the analyzer via system bus 14.

Count mapper 43 and line counter 45 in combination constitute count statements circuitry 40, which counts the occurrences of a high level language instruction called a code line or simply a "line". Each high-level language line typically generates many low-level language opcodes, and the data on the emulation bus is in opcode, low-level form. Only the first opcode generated by each high-level language line should be counted to determine how many times that line was executed.

The count mapper 43 is a RAM which maps the opcodes received over the emulation bus 12 into address locations in the line counter 45 which represent up to 255 chosen lines of high level language.

The line counter 45 comprises a 256 x 12-bit RAM and a read-increment-write circuit. When line counter 45 receives the count enable signal from the function generator 25, it reads the value at the address location, received from count mapper 43, increments the value by one, and writes the incremented value back into the same address location. Thus at the end of a measurement, each of the address locations assigned to count a high level language line contains the count of occurrences of that line.

The circuitry on the p.c. board shown in Figure 3A is connected to the circuitry on the p.c. board shown in Figure 3B via emulation bus 12, system bus 14 and high level resource bus 16.

Referring now to Figure 3B, the second p.c. board contains the fast sequencer 22, the X and Y measurement function generators 21 and 23, dedicated function generator 25, timer 27 and occurrence counter 29.

The "X" and "Y" measurement function generators 21 and 23, along with the dedicated function generator 25 translate general purpose output signals from the high level resource generator into special purpose, "dedicated" functions. The dedicated functions produced are used to control specific procedures of the analyzer. For example, the "Store" function causes the current cycle to be stored in acquisition memory; the "Timer Count" function determines whether or not timer 27 will be count enabled for the current cycle.

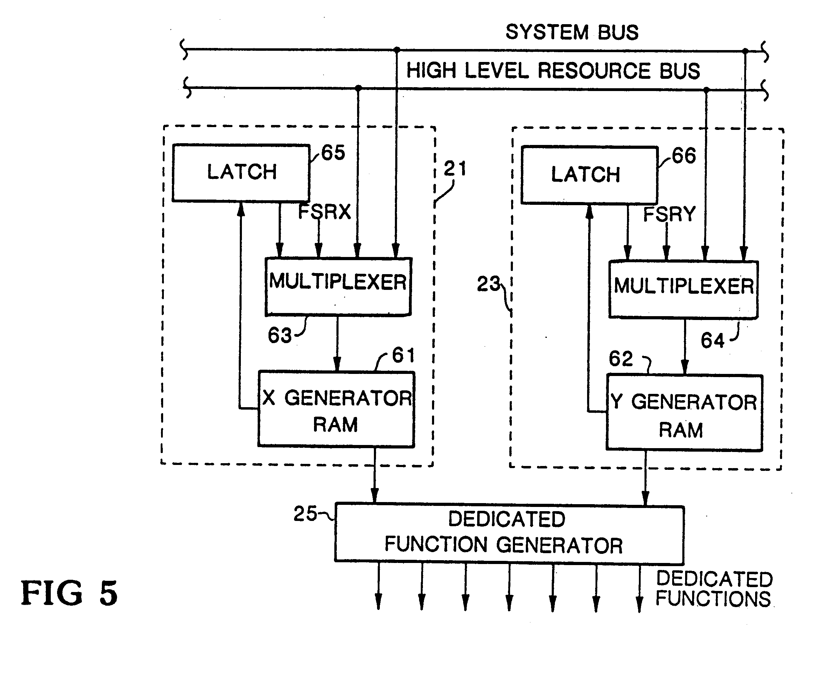

Figure 5 depicts a block diagram of the components of the X and Y function generators. X function generator 21 comprises X generator RAM 61 (a 4k deep by 20-bit mapper RAM), a 12-bit multiplexer 63 to select what goes on the RAM address bus, and a 4-bit latch 65. X generator RAM 61 is loaded with address information from microprocessor 39 through multiplexer 63. The programming of the addresses in X generator RAM 61 determines which outputs from high level resource generator 19 affect which dedicated functions. The latch 65 provides a means for creating sequences within X generator 21. A feedback path between latch 65 and X generator RAM 61 allows a state of latch 65 to be used in a manner similar to an input from high level resource generator 19. For example, the function created in the RAM might be defined as "true" for some combination of high level resource inputs and the latch being in a certain state. The output signals of X generator RAM 61 define the "next state" via the feedback path to latch 65, and also provide input signals to dedicated function generator 25.

Y function generator 23 is similar to the X generator, except Y generator RAM 62 is 16 bits wide instead of 20 bits wide. Multiplexer 64 and latch 66 function like the equivalent circuits in the X generator. Output signals from Y generator RAM 62 also provide input signals to dedicated function generator 25.

Dedicated function generator 25 combines the output signals from X and Y function generator RAMS 61 and 62, and three other special purpose signals (store and stop signals from the fast sequencer and a memory full signal) to produce the dedicated functions output signals.

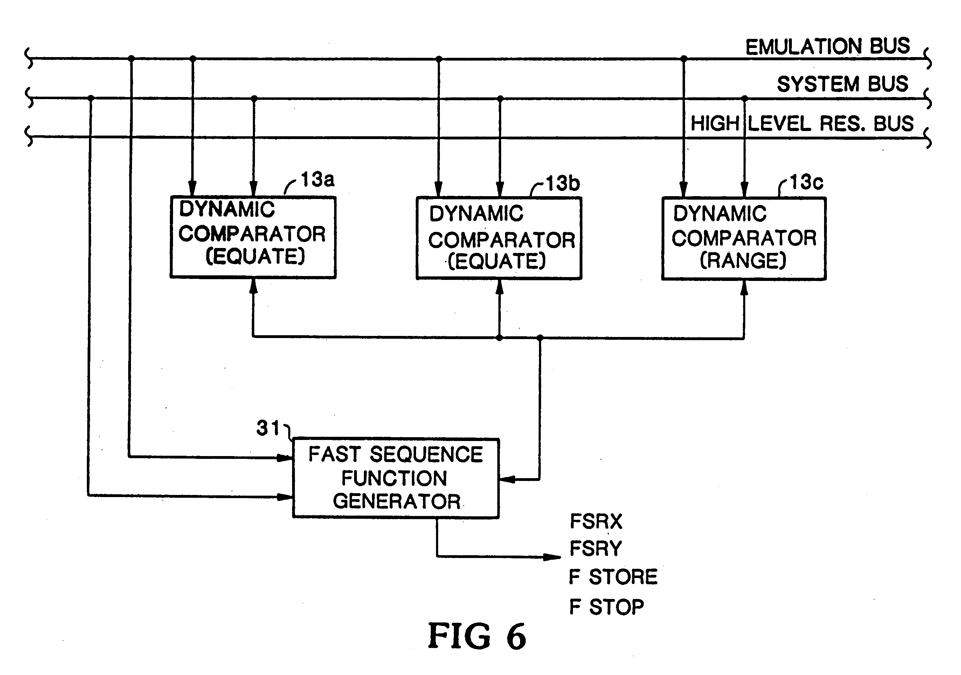

The dynamic recognition portion of the analyzer, referred to as fast sequencer 22 on Figure 3B, and shown in more detail in Figure 6, comprises three dynamic recognition comparators 13a, 13b and 13c and fast sequence function generator 31. With fast sequencer 22, the analyzer can trace dynamically activated variables on a real-time basis. Dynamically activated variables, used in many high level languages as local variables, have no permanently assigned memory address, but are assigned an address, usually on a stack, when the variable is needed during program execution.

One thing that is known about these variables is where the variable will be stored on the stack relative to a stack reference address used in the procedure which activates the variable. Thus, once the variable is activated, its location is defined if the stack reference address can be determined. This reference address, or "hook" is placed on the stack when the procedure to activate the variable is entered. Another quantity known relative to the hook is the return address, which is used to indicate that the variable has been inactivated and is no longer valid.

The fast sequencer is programmed to watch for entry into the procedure, determine the stack reference address, calculate the address range for the dynamic variable and then signal any access to the variable until it is inactivated.

To accomplish this, before starting a measurement, one dynamic recognition comparator 13a is loaded with the entry address for the procedure to activate the variable, and a second dynamic range comparator 13b is loaded with the status of the instruction which defines the stack reference address. The fast sequencer is loaded with the offset values which determine the range of locations of the dynamic variable and the location of the return address relative to the stack reference address.

When comparator 13a signals entry into the procedure, the fast sequence function generator begins to monitor comparator 13b for the "hook" operation. When the "hook" operation transpires, fast sequence function generator 31 acquires the current emulation address (actually the stack location), and adds this address to the stored offset values to determine the upper and lower boundary addresses for the location range of the dynamic variable. The sequencer 31 loads these boundary addresses into the third dynamic comparator 13c. Thus, the third comparator 13c is configured in real-time upon activation of a variable being traced to signal access to that dynamic variable. Upon any access to the variable, the fast sequence function generator provides a signal (F_STORE) to the dedicated function generators 25 to enable the store function and store the current state in acquisition memory 35.

The fast sequence function generator 31 also computes the return address of the stack from the hook address and the stored return address offset. The fast sequence function generator 31 loads this address into dynamic comparator 13b, replacing the stack reference instruction status which is no longer needed. Thus, comparator 13b is configured to signal an exit from the procedure, indicating the variable being traced is no longer valid. At this point, if further tracing of the variable is required, the sequence is reinitiated, to determine the new address range allocated to the variable when it is activated subsequently.

Timer 27 is a flexible 24-bit counter which can be programmed to count either signals from 10 Mhz clock 47 or from a state clock. Timer 27 can be reset before a measurement and then simply count an event or time until the end of the measurement. Alternatively, because the output of timer 27 is fed into X and Y function generators 21 and 23 just like a high level resource line, the timer can be loaded with an initial count and its output used to alter a sequence, cause a state to be stored or possibly stop the analyzer.

Occurrence counter 29 is a 16-bit counter which counts occurrences of events. Occurrence counter 29 can be reset before a measurement and then count the occurrences of an event during the measurement. Alternatively, like timer 27, the occurrence counter can be loaded with an initial value and used to alter a sequence or cause a state to be stored, for example, after the Nth occurrence of an event. The output of the occurrence counter is fed into high level resource generator 19, and is thus similar to an output from the recognition comparators 15 and 17.

Emulation bus 12, system bus 14 and high level resource bus 16 interconnect the p.c. board of Figure 3B with the boards of Figures 3A and 3C.

The third p.c. board, shown in block diagram form in Figure 3C, includes acquisition memory 35, floating point counter 33, opcode address register 37 and microprocessor 39.

Acquisition memory 35 comprises a 96-bit wide by 4096 deep RAM. During a measurement, acquisition memory stores the currently available block of data upon a signal from the store function in dedicated function generator 25. Each block of data stored in acquisition memory includes 96 bits: 8 bits of status, 24 bits of address and 16 bits of data from emulation bus 12, 24 bits from the opcode address register 37, 20 bits from the floating point counter 33 and 4 flag bits.

There are two modes of storing information in acquisition memory 35, sequential and random access. In sequential mode, the memory is filled by storing the first block of data in a fixed location and storing succeeding blocks of data in sequentially following locations. The sequential mode is used generally for storing the data acquired during a measurement.

The random access mode is used for a measurement called "last access", which stores data concerning the last occurrence of a chosen event. The event is typically access to a variable. Because the number of times the variable is accessed may exceed the capacity of acquisition memory, it is not effective to simply sequentially store all accesses. In random access mode, data from an access to a given variable is written over data from any previous access to that variable. Each variable to be traced is thus assigned its own address location in acquisition memory. High level resource generator 19 is configured to output the assigned memory address to direct acquisiton memory 35 to store the current emulation data at the proper address. All event data is stored, but all unwanted event data is stored in a single address location in acquisition memory 35, designated the "discard" location. Thus, at the end of the measurement, the information concerning the last access to each chosen variable is stored in the memory location assigned to that variable.

When any measurement is completed, the data stored in acquisition memory 35 can be unloaded by microprocessor 39 for postprocessing and display of the data to the user.

Opcode address register 37 comprises three 8-bit latches which can temporarily save the address information currently on emulation bus 12. The opcode address register latches the current emulation address upon receiving a signal from the address recognition comparator which is programmed to recognize when an "opcode read" is being performed by the target system. Thus, opcode address register 37 latches the latest opcode address.

Opcode address register 37 is updated after the current state is stored in acquisition memory. Thus the current emulation address plus the previous opcode address are stored. When the current emulation address is an opcode address both this latest opcode address and the previous opcode address are stored. This can aid in sorting out program flow in certain measurements.

Floating point counter 33 can count states or can be used as a timer counting pulses from 10Mhz clock 47, depending on which measurement mode is being carried out. Whenever a state is stored in acquisition memory 35, the floating point counter value is also stored.

Microprocessor 39 is the interface between the software debugging analyzer and the host system via the BPC bus 18. Microprocessor 39 translates the low-level data acquired in acquisition memory 35 into high-level symbols suitable for display to the user by accessing the compiler database. Although microprocessor 39 does not participate actively in data acquisition, it translates the measurements specified by the user into the constructs required to set up the other components of the analyzer for making the measurements.

The user installs certain controlling software into the host system when he installs the software debugging analyzer. That controlling software implements the various commands entered on keyboard 11 through which the user will operate the software debugging analyzer. As those commands are invoked, the controlling parameters for the various measurements emerge and are transferred to the onboard microprocessor 39 where they are used to configure the hardware elements of the software debugging analyzer and to control the operation of that circuitry. The user also installs certain compiler database information concerning the target system under test, which is used in decoding high level language symbols into addresses and vice-versa. Upon completion of the measurement, the raw data collected is transmitted to microprocessor 39 where it is post-processed to remove any extraneous data captured and relayed back to the host system processor where the processing is completed by reducing the data and creating various displays of the results on display 3.

Microprocessor 39 is coupled to each of the system elements depicted in Figure 2 by system bus 14. After microprocessor 39 receives the parameters of the measurement to be performed, microprocessor 39 configures the circuit elements of the software debugging analyzer as described below.

If a measurement requires recognition of static address, data or state information, microprocessor 39 loads the proper configurations into address recognition comparators 15 and data recognition comparators 17. Microprocessor 39 configures high level resource generator 19 to define complex combinations of events recognized by the comparators 15 and 17. Microprocessor 39 also adjusts the operation of the sequencers in X and Y measurement function generators 21 and 23 to control the logic necessary to implement the high speed real-time acquisition of data carried out by dedicated function generator 25.

For measurements which require recognition of dynamically activated variables, microprocessor 39 loads the proper configurations into the dynamic recognition comparators 13. Microprocessor 39 also adjusts the operation of the sequence in fast sequence function generator 31, so that the fast sequencer can control the operation of the dynamic recognition comparators 13 during the real-time measurement, loading the address of the dynamically activated variables into the comparators "on the fly" as those variables are activated and their locations defined.

Microprocessor 39 also configures count mapper 43, and initializes floating point counter 33, timer 27 and occurrence counter 29.

When the measurement has been completed, microprocessor 29 unloads the data stored in acquisition memory 35 and the count data stored in line counter 45, if required. Microprocessor 39 then post processes the data to remove any extraneous data such as unexecuted prefetched instructions and to translate the data from low-level code to high-level language. This translation is accomplished by referring to the compiler database information resident in the host system. Finally, microprocessor 39 passes the post processed data acquired from the measurement to the host system for display to the user.

The details of the software by which the microprocessor 39 operates are in the source code listing of that software which is attached as Appendix A. Reference to this appendix will be useful in answering any detailed questions concerning the operation of microprocessor 39.

### Measurements

Four measurements, called trace measurements form the backbone of the high-level software debugging operations provided by the software debugging analyzer. The trace modules and the trace data flow measurements are more global, giving the programmer an overview of both program and data flow at the module level. The trace statements and trace variables measurements are more local, and give the precise order of statement execution or the values of specific variables each time they are accessed. Two additional measurements, time modules and count statements aid the designer in software debugging as well as optimizing and testing procedures. While the measurements described below do not exhaust the entire range of measurement capabilities of the flexible hardware resources associated with the analyzer, they demonstrate the use of those hardware resources in performing measurements central to the software debugging process.

### Trace Modules

The trace modules measurement tracks program flow by capturing the entry and exit to the specified modules. This is particularly useful in situations where modules are written by different programmers and may even be in different high-level languages. Tracing module flow when they are all first integrated shows in what order they were called and identifies possibly general locations of problems.

Either specifically named modules or all the modules in a file can be traced. The "all" specification counts as one symbol; the modules can also be in up to four different non-adjacent files or in up to ten adjacent files.

Ten explicitly named modules can be traced, with additional limitation imposed in this particular embodiment by the number of address range comparators. However, if the modules are not adjacent, only four can be traced (there are only four range resources). If all the modules in a file are specified, up to 255 different modules can be traced. In the most common setup of this measurement, using the "all" specification, no more than one range is used per file, so this is not a real limitation. The analyzer can trace recursive calls indefinitely and can trace both Pascal and C modules in the same measurement.

The analyzer can run the trace modules measurement in both real-time and non-real-time modes. In real-time, all modules in up to ten files can be traced to see program flow, including interrupt routines. Accurate time tags are displayed indicating the time spent in each module. Thus, the programmers can see quickly the order in which the modules are executed, when recursion occurred, how often an interrupt routine was called, and how much time was spent in each module. These are all useful measurements to generally locate a problem; if any of this information deviates from expectations, then another measurement can be made to localize the problem.

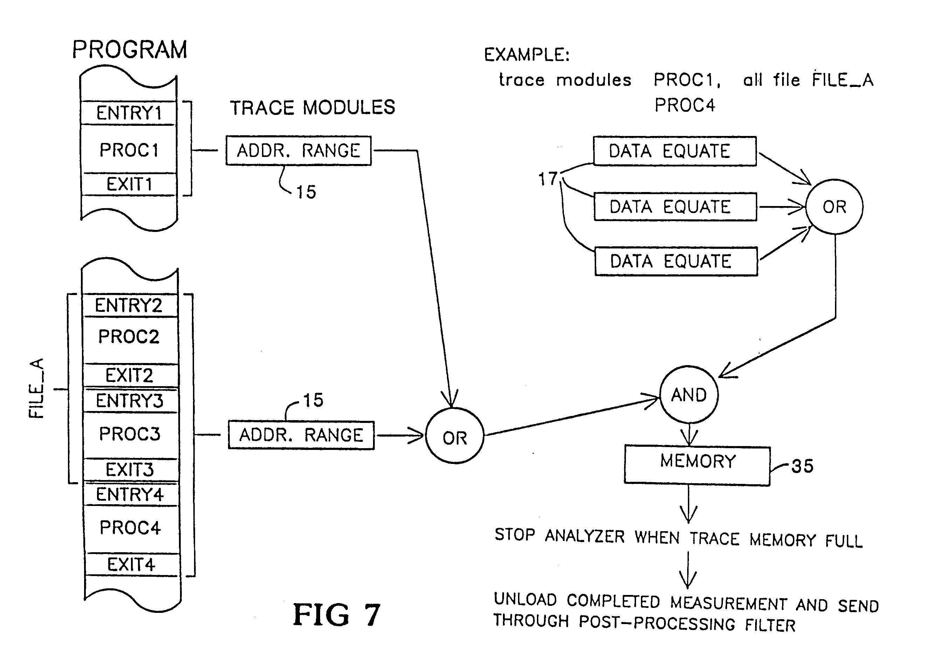

Figure 7 shows an example of how the analyzer's hardware resources are used for a measurement "trace modules PROC1, all FILE_A, PROC4". Address comparators 15 configured as range comparators and data comparators 17 configured as equate comparators are used to detect module entry and module exit. The data equate comparators 17 are what actually determine the entry and exit points. Microprocessor 39 sets up these comparators to recognize the first and last instructions of a module based on data bus patterns. The address range comparators 15 are set up and used to qualify the entry and exit points so that only the ones in the specified modules are saved.

Address ranges are set up around the addresses associated with the specified modules. In this example, even though three symbols were specified, only two ranges are needed; by definition all the modules in a single file are adjacent, and it happens that PROC4 is adjacent to FILE_A.

Finally, the results of the low-level recognition resources are logically combined by setting up high level resource generator 19, so that dedicated function generator 25 causes the data associated with an entry or exit point to be stored in acquisition memory 35. In prefetching, sometimes data is stored which was not a true entry; microprocessor 39 post processes the data and these points are filtered out.

Ten explicitly named modules can be traced; with an additional limitation imposed in this particular embodiment by the number of address range comparators. However, if the modules are not adjacent, only four can be traced (there are only four range resources). If all the modules in a file are specified, up to 255 different modules can be traced.

### Trace Data Flow

The trace data flow measurement tracks the values of data at the entry and exit points of a procedure. Both static and dynamic variables can be traced. However, local variables and variables passed by value cannot be displayed at the exit point of the procedure, for at this point they are undefined. Unlimited recursion can also be traced. Up to three different modules can be traced in one measurement, with up to 10 symbols specified. Since the traced data is not accessible on the emulation bus at entry and exit points of a module, this measurement must be run in non-real-time.

Data can be viewed at entry and exit of a procedure, showing whether it was modified within the module. Values of important variables can be seen at each level of a recursive procedure; this is especially useful if a procedure is stuck in infinite recursion. The variable which should cause an exit condition can be traced and the bug quickly found.

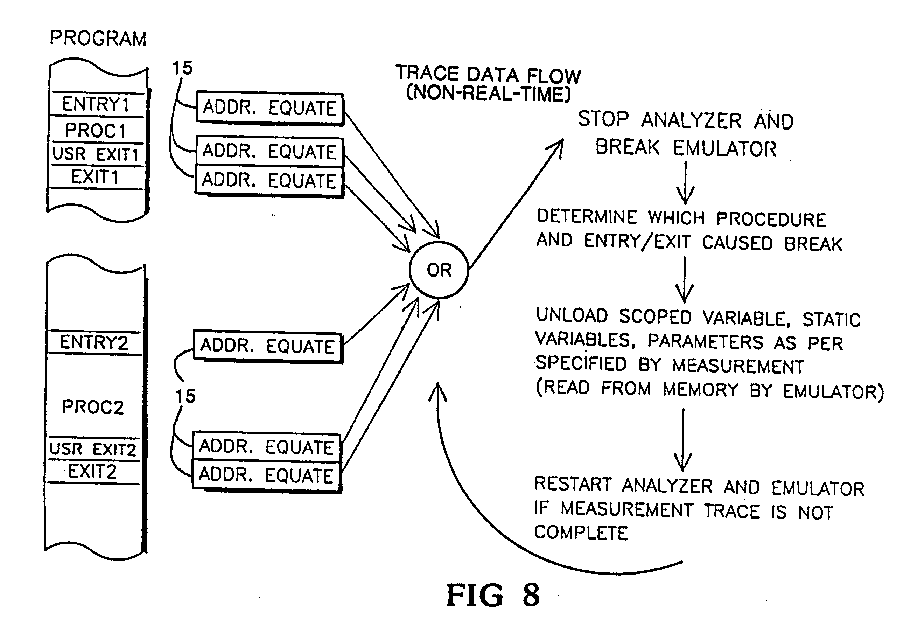

Figure 8 shows how the analyzer's resources are used in a trace data flow measurement. As explained earlier, this measurement can only run non-real time because the analyzer needs information that is not flowing over the emulation bus 12. Three address recognition comparators 15 configured as equate comparators are used for each module, limiting the number of modules that can be specified to three. For each module, microprocessor 39 sets up one equate comparator for the entry, one for the exit, and a third comparator to recognize an address at the end of user code, just before the address of the module exit.

Three equate comparators are needed for each module being traced to accommodate recursive routines. By having an equate comparator set up to look for an address that occurs within the module, but before the exit and preferably at the end of the user code, any calls would have to have occurred previously.

When one of the equate comparators is satisfied, the dedicated function generator halts the analyzer and the values of specified variables are read from emulation or user memory. Then the analyzer and emulator are restarted.

The only limit imposed on the number of variables specified is the 10 symbol limit on entering the measurement. Of course, variables that are not scoped at module entry or exit cannot be traced.

### Trace Statements

The trace statements measurement traces statement flow within a single module. The statements are displayed in the order of their execution and variable values are displayed. The measurement can run in both real-time and non-real-time. The statement range, which can be unlimited, can be defined as the entire procedure or a line range within a procedure. There is also a "don't care" specification, that traces everything occurring on the emulation bus; it can trace statements in different modules. The advantage to running in non-real-time is that dynamic variables can be traced. Otherwise, only the values of static variables will show up on the display; using "don't care" no variable values will be displayed. Again, time tags are displayed showing an accurate execution time for each high-level statement.

This measurement is useful when a problem has been isolated down to a module. The display gives a step-by-step view of the execution order of the high-level statements, much like a state display of low-level code. The debugging process can be greatly sped up, as all the relevant information concerning the execution of a module is displayed. This is a highly effective way to observe the interaction between program and data flow.

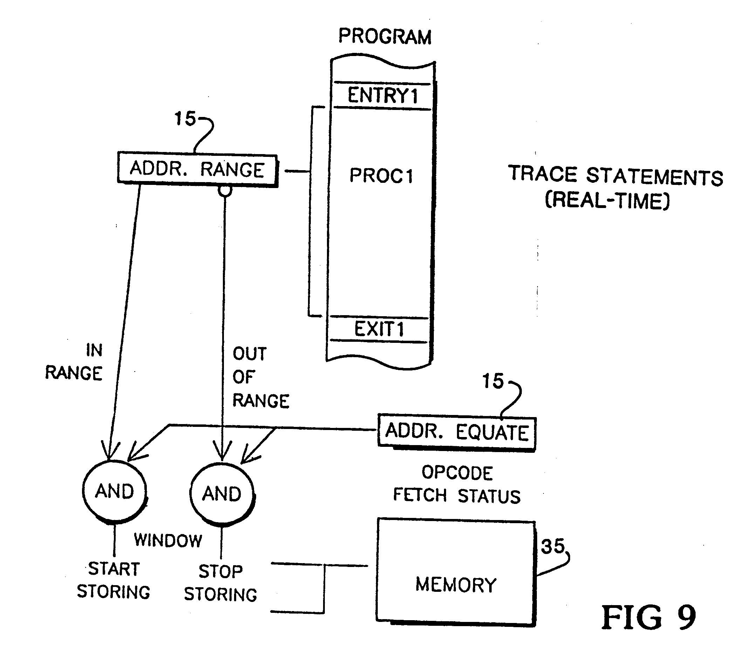

Trace statements can be divided into two measurements, a real-time one and a non-real-time one. The real-time one is less complex conceptually because the emulator is never halted, and all the stored information is flowing over emulation bus 12. Figure 9 illustrates an example of how the analyzer's resources are used in making a real-time trace statements measurement over a line range or procedure. Microprocessor 39 sets up one address recognition comparator 15 configured as a range comparator to detect activity in the specified line range to determine when a storing "window" should be opened. The special address recognition comparator which is set up to detect an opcode fetch is used to signal the execution of code. The high level resource generator 19 is set up so that these two signals are ANDed together and when they go true a "window" is opened and all the data flowing over the emulation bus is stored in acqusition memory. When the address range comparator 15 signals that the program is executing code outside of the specified line range, then the storing "window" is closed. A trace statements measurement using the "don't care" specification is simply the analyzer executing with the window continuously open.

The non-real-time trace statements measurement is more complex because more information is gathered, including information about dynamic variables. As in the real-time measurement one address recognition comparator 15 is programmed to detect the range of statements traced and one address recognition comparator is used to detect an opcode fetch to create a mesurement "window". In addition, two address recognition comparators are set up to recognize the entry and exit points. Upon entry or exit, the analyzer halts the emulator using the dedicated function generator 25 and stores data concerning the location and value of dynamic variables.

### Trace Variables

The trace variables measurement allows the user to trace all acccesses to specified variables during program execution. The measurement can run both in real-time and non-real-time; the feature set for both modes is identical. Up to ten variables can be traced in each measurement, but, during execution the address recognition comparators 15 are used, so sometimes the number of static variables that can be traced is reduced. Up to ten of dynamic vairables under a given module header can be traced. Source line numbers are displayed, convenient for localized debugging. A variable which is seen to have an incorrect value in a trace data flow measurement can thereafter be traced using the trace variables measurement, and all the reads and writes to it will be displayed. It is then a simple matter to determine where the program went astray.

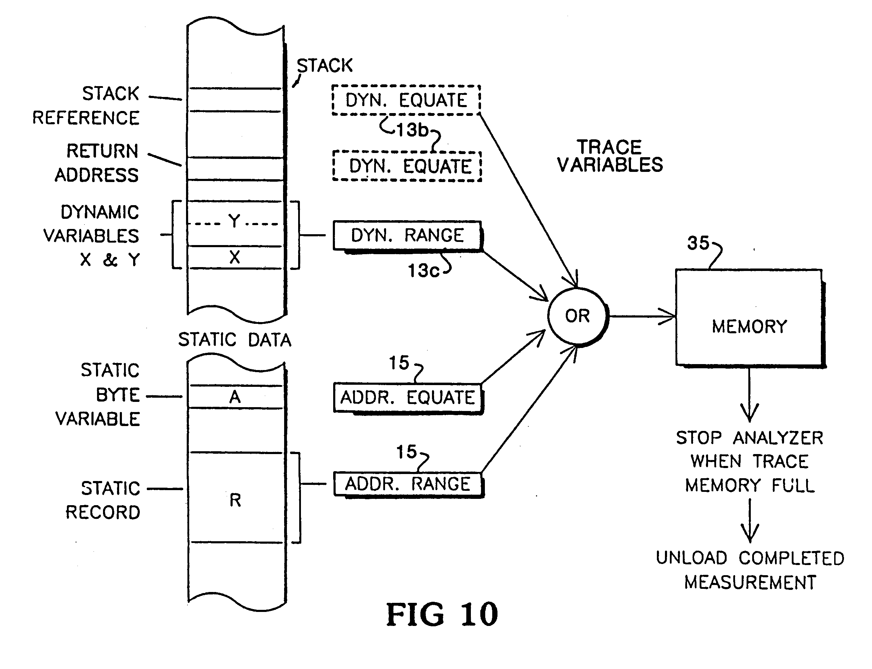

Trace variables works the same way in real time as in non-real time, as illustrated in Figure 10. Static variables are comparatively easy to trace. Address recognition comparators 15 configured as equate comparators are used for static variables that are a byte wide, and address comparators configured as range comparators are used on longer variables, records and arrays. The analyzer will also use one address range comparator over any adjacent variables. If the range is accessed the analyzer's recognition logic circuits, through dedicated function generator 25 cause the address and values to be stored in acquisition memory 35.

Dynamic variables are traced in a similar way. However, since the number of dynamic recognition comparators is less, one dynamic comparator is used to cover all variables even if they are not adjacent. During postprocessing, unwanted accesses are filtered out by microprocessor 39. The difficulty in tracing dynamic variables is locating the stack reference, and the actual memory locations for these dynamic variables, since these are not defined until the program is executing.

Microprocessor 39 sets up one dynamic equate comparator 13a to locate the entry of the procedure where the dynamic variables of interest are defined. As described earlier, the first data write after a module entry point is the dynamic variable stack reference, which is stored by the fast sequence function generator 31. Using this stack reference, and the offsets for dynamic variables which microprocessor 39 provided from the compiler data base, fast sequence generator 31 determines the locations range of the dynamic variables and loads these addresses into the other dynamic recognition range comparator 13c. This is done before any of these variables have been read or written to by the user program. Then the dynamic recognition comparator 13b, which was used to recognize the first data write, is re-loaded to recognize the location on the stack of the procedure's return address. Fast sequence function generator 31, through dedicated function generator 25, causes all accesses to the range stored in the second comparator to be stored in acquisition memory 35 until equate comparator 13b indicates that the return address has been read. After this the variables no longer exist and the sequence is started up again.

### Time Modules

Up to four modules can be timed using the time modules measurement, which displays the minimum, maximum, and mean time spent in each module. The measured time includes all time between entry of the specified module and exit from that module, including time spent in subroutine calls and interrupts. Timing recursive modules is handled by the analyzer, up to 255 levels deep. The measurement can be run in both real-time and non-real-time.

This measurement is useful in a variety of cases. Modules can be tested to see if they are executing within specified times. Inefficient modules can be spotted and then optimized. Also, the effect that interrupts have on modules can be studied. The display also shows the number of times the module was timed, which gives an indication of the statistical accuracy of the measurement.

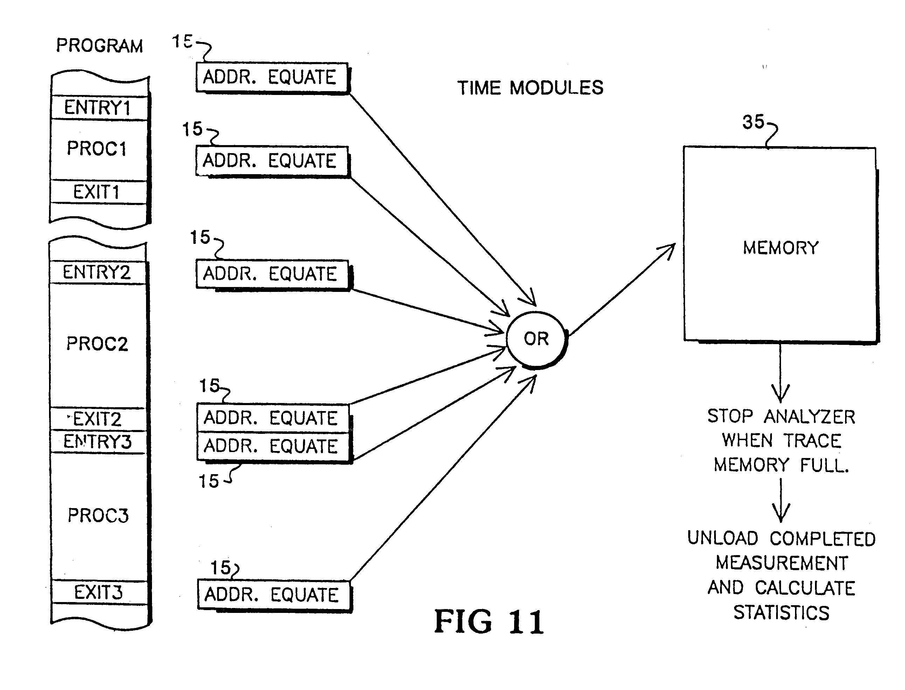

Figure 11 illustrates how the analyzer's resources are used to make the time modules measurement. Two address recognition comparators 15 configured as equate comparators are used for each module, thus a limit of four modules can be traced. These equate comparators are set up by microprocessor 39 to look for entry and exit points of each module. When an entry or exit is detected, the analyzer's logic recognition circuits, through dedicated function generator 25 cause the state to be stored in acquisition memory 35. Dedicated function generator 25 also starts the floating point counter 33 at the beginning of the measurement, and the absolute time for every exit and entry point is stored in acquisition memory 35 as a time tag with the stored state. When the measurement is complete, microprocessor 39 uses these time tags to determine the time spent in each module, and then determine the statistical results.

### Count Statements

The count statements measurement counts the number of times each statement in a specified module or line range is executed. Up to 255 statements can be counted, but they all must be in one module. The counters will count up to 4094 then overflow; however, if only one line is traced, the analyzer uses the floating point counter 33 which has a much larger 20-bit floating point capacity.

This measurement's main benefit is in the area of software coverage testing. In the testing phase of software development it is often difficult to know whether all parts of the software have been exercised. For example a certain branch may never be taken or some parts of a case statement may never be executed. Count statements is a quick and simple way to verify this coverage testing. If a statement is never executed, either another test can be run to exercise it, or it can be removed. Also, count statements is an easy way to verify the operation of loop counters, as the statements within the loop should be executed a known number of times.

The count statements measurement uses the same address recognition comparators used in the other measurements, but also uses some dedicated hardware, the count mapper 43 and line counter 45. The analyzer can trace 255 lines in one module, but this traced part of the program cannot exceed 4k bytes of memory because the count mapper 43 is a 4k to 256 "bucket" mapper. The "bucket" refers to the 12-bit values in line counter 45 associated with each source line. The measurement works by setting up the address range comparator 15 for recognition over the specified module/line range to drive the count enable signal. Before the measurement is executed, microprocessor 39 loads count mapper 43, using the line number information found in the compiler database file. When the measurement is executed, the appropriate counter or "bucket" is incremented when the first machine code statement corresponding to a given line number is executed. Thus a line that contains many machine instructions (they could even loop and execute a number of times) is only incremented once.

## Claims

1. A method of acquiring data concerning the execution of software in a target system under test, which comprises the steps of:
monitoring the status, data and address signals on an emulation bus (12) from the target system under test; programming address-data recognition comparators (15, 17) responsive to said emulation bus signals, said address-data recognition comparators (15, 17) being programmable to detect static events, particular address and/or status, and/or data signal or an event in which these signals are within a predetermined range and to produce a first output whenever the emulation bus signals are equal to selected values or within a range of selected values;
programming a high-level resource generator (19), responsive to the first output of the address-data recognition comparators (15, 17), said high-level resource generator (19) being programmable to determine the occurrence of combinations of multiple events detected by the address-data recognition comparators (15, 17) and to produce a second output whenever a selected combination of multiple events and corresponding output patterns from the address-data recognition comparators occur;
characterized by following steps:
programming dynamic recognition comparators (13) responsive to said emulation bus signals, said dynamic recognition comparators (13) being programmable to detect events which involve dynamically activated variables of a higher programming language whenever the emulation bus signals are equal to selected values or within a range of selected values;
reprogramming the dynamic recognition comparators (13) during the execution of the software under test to produce a fourth output whenever the emulation bus signals are equal to selected values or within a range of values representing an access to a dynamically activated variable, said selected values or range of values being determined by a fast sequence function generator (31) in response to a third output from the dynamic recognition comparators (13) and to signals on the emulation bus representing the stack location, said fast sequence function generator (31), calculating the address range assigned to the dynamically activated variable depending on said stack location and predetermined offset values and reprogramming at least one of said dynamic recognition comparators with the address range assigned to the dynamically activated variable said fast sequence function generator (31) also being responsive to said fourth output of said dynamic recognition comparators to produce a fifth output; enabling a dedicated function generator (25) to respond to the second output from the high level resource generator (19) and to the fifth output from the fast sequence function generator (31) to produce at least one output;
storing the status, data and address signals on the emulation bus (12) in an acquisition memory (35) in response to the output signal from the dedicated function generator (25).

2. The method according to claim 1,
characterized by software based measurement programs:
- trace measurements for carrying out high-level software debugging analysis, and
- time and count measurements each for measuring times spent in each program module under test and the number of times of execution of specified program statements.

3. The method according to claim 2,
characterized in that the trace measurements are classified into following types:
- trace module measurement for tracking program flow by capturing the entry and exit to a specified program module;
- trace data flow measurement for tracking the values of data at the entry and exit points of a procedure,
- trace statements measurement for tracing statement flow within a single program module, and
- trace variables measurement for tracing all accesses to specified variables during program execution; and
the time and count measurements are classified into the types:
- time modules measurement for measuring and displaying minimum, maximum and mean time spent in a specified program module, wherein the measured time includes all time between entry of the specified module and exit from that module including time spent in sub-routine calls and interrupts and,
- count statements measurement for counting the number of times each statement in a specified module is executed.

4. Apparatus for performing the method according to claim 1, which comprises:
address-data recognition comparators (15, 17) to detect a particular address and/or status and/or data signal or an event in which these signals are within a predetermined range and to produce a first output signal upon the occurrence of a chosen pattern of signals received on an emulation bus from a target system under test, and a high-level resource generator (19) responsive to said first output signal to determine the occurrence of combinations of multiple events detected by the address-data recognition generator (15, 17) and to produce a second output signal upon the occurrence of a chosen pattern of said first output signal;
characterized by
dynamic recognition comparators (13) programmable to detect events which involve dynamically activated variables of a higher programming language and to produce a third output signal upon occurrence of a chosen pattern of signals on the emulation bus, at least one of said dynamic recognition comparators (13) being reprogrammable during the execution of software of the target system to produce a fourth output signal upon the occurrence of a chosen pattern of signals received on the emulation bus, said pattern representing access to a dynamically activated variable,
a fast sequence function generator (31) being responsive to said third output signal and to signals on the emulation bus representing the stack location, for calculating the address range assigned to the dynamically activated variable depending on said stack location and predetermined offset values, and for reprogramming at least one of said dynamic recognition comparators, said fast sequence function generator (31) also being responsive to said fourth output signal to produce a fifth output signal;
an acquisition memory (35) which receives signals from the emulation bus and stores selected signals; and
a dedicated function generator (25) responsive to said second output signal and to said fifth output signal to store data in said acquisition memory.

5. The apparatus according to claim 4,
characterized in that
said address-data recognition comparators (15, 17),
said dynamic recognition comparators (13),
said acquisition memory (35) and
said dedicated function generator (25) are coupled to
said target system under test via the emulation bus (12) and data input means (11).

6. The apparatus according to claim 4 or 5,
characterized in that
- the address-data recognition comparators (15, 17),
- the dynamic recognition comparators (13),
- the acquisition memory (35), and
- the dedicated function generator (25) are coupled to a microprocessor (39) via a system bus (14), said microprocessor (39) receiving the parameters of the measurement to be performed and being adapted for configuring the apparatus components according to classified measurement types.

## Patentansprüche

1. Verfahren zum Sammeln von Daten über die Ausführung von Software in einem sich im Test befindlichen Objektsystem, mit folgenden Schritten:
Überwachen der Status-, Daten- und Adreßsignale auf einem Emulationsbus (12) von dem getesteten Objektsystem; Programmieren von Adreßdaten-Erfassungskomparatoren (15, 17), die auf die Emulationsbussignale reagieren, wobei die Adreßdaten-Erfassungskomparatoren (15, 17) so programmiert werden können, daß sie statische Ereignisse, bestimmte Adreß- und/oder Status- und/oder Datensignale oder ein Ereignis feststellen, bei denen diese Signale innerhalb eines vorbestimmten Bereiches liegen und ein erstes Ausgangssignal erzeugen, wenn die Emulationsbussignale gewählten Werten gleich sind oder innerhalb des gewählten Wertebereiches liegen;
Programmieren eines Generators (19) für hochrangige Betriebsmittel, der auf das erste Ausgangssignal des Adreßdaten-Erfassungskomparators (15, 17) reagiert, wobei der Generator (19) für hochrangige Betriebsmittel so programmiert werden kann, daß das Auftreten von von den Adreßdaten-Erfassungskomparatoren (15, 17) festgestellten Kombinationen von Mehrfachereignissen bestimmt werden und jedesmal ein zweites Ausgangssignal erzeugt werden kann, wenn eine gewählte/bestimmte Kombination von Mehrfachereignissen und entsprechenden Ausgangsmustern von den Adreßdaten-Erfassungskomparatoren auftritt;
gekennzeichnet durch folgende Schritte:
Programmieren von dynamischen Erfassungskomparatoren (13), die auf die Emulationsbussignale reagieren, wobei die dynamischen Erfassungskomparatoren (13) so programmiert werden können, daß sie Ereignisse, die dynamisch aktivierte Variable einer höheren Programmiersprache beinhalten erfassen, wenn die Emulationsbussignale gleich den gewählten Werten oder innerhalb eines gewählten Wertebereiches sind;
Umprogrammieren der dynamischen Erfassungskomparatoren (13) während der Ausführung der sich im Test befindlichen Software, um jedesmal ein viertes Ausgangssignal zu erzeugen, wenn die Emulationsbussignale gleich ausgewählten Werten sind oder in einem Wertebereich liegen, die einen Zugriff zu einer dynamisch aktivierten Variablen darstellen, wobei die gewählten Werte oder der Wertebereich durch einen Schnellseguenz-Funktionsgenerator (31) abhängig von einem dritten Ausgangssignal von den dynamischen Erfassungskomparatoren (13) und von den Stackplatz darstellenden Signalen auf dem Emulationsbus bestimmt werden, wobei der Schnellsequenz-Funktionsgenerator (31) den der dynamisch aktivierten Variablen zugeordneten Adressenbereich in Abhängigkeit von dem Stackplatz und vorbestimmten Offsetwerten berechnet und mindestens einen der dynamischen Erfassungskomparatoren mit dem der dynamisch aktivierten Variablen zugeordneten Adressenbereich umprogrammiert und der Schnellsequenz-Funktionsgenerator (31) auch auf das vierte Ausgangssignal des dynamischen Erfassungskomparators reagiert, um ein fünftes Ausgangssignal zu erzeugen;
Freigabe eines reservierten Funktionsgenerators (25), der auf das zweite Ausgangssignal des Generators für hochrangige Betriebsmittel (19) und auf das fünfte Ausgangssignal von dem Schnellsequenz-Funktionsgenerator (31) anspricht und mindestens ein Ausgangssignal erzeugt; und
Speichern der Status-, Daten- und Adreßsignale auf dem Emulationsbus (12) in einem Sammelspeicher (35) als Reaktion auf das Ausgangssignal des reservierten Funktionsgenerators (25).

2. Verfahren nach Anspruch 1, gekennzeichnet durch Meßprogramme auf Softwarebasis
- Ablaufverfolgungsmessung zum Ausführen von Fehlerbeseitigungsanalysen bei höherer Software, und
- Zeitmess- und Zählprogramme jeweils zum Messen von Zeiten, während denen jeder Programmodul im Test verbringt und der Anzahl, wie oft bestimmte Programmanweisungen durchgeführt wurden.

3. Verfahren nach Anspruch 2, gekennzeichnet dadurch, daß die Ablaufverfolgungsmessung in folgende Typen eingeteilt werden kann:
- Modulablaufverfolgungsmessung zur Verfolgung des Programmablaufs durch Festhalten des Beginns und Endes eines bestimmten Programmoduls;
- Datenablaufverfolgungsmessung zum Verfolgen der Datenwerte an den Start- und Endstellen einer Prozedur,
- Anweisungsverfolgungsmessung zur Verfolgung des Flusses von Anweisungen innerhalb eines einzelnen Programmoduls, und
- Variablen-Ablaufverfolgungsmessung zur Verfolgung aller Zugriffe zu bestimmten Variablen während der Programmausführung, und daß die Zeitmess- und Zählprogramme in folgende Typen eingeteilt sind:
- Modulzeitmessung zum Messen und zur Anzeige von Mindest-, Höchst- und mittlerer Zeitdauer, die von einem bestimmten Programmodul gebraucht wird, wobei die gemessene Zeitdauer die Gesamtzeit zwischen dem Eintritt in ein bestimmtes Programmodul und Verlassen dieses Programmoduls miteinschließt, einschließlich der Zeit, die für Unterprogramm-Aufrufe und Unterbrechungen benötigt wurde und
- Anweisungsanzahlmessung zum Zählen, wie oft jede Anweisung in einem bestimmten Modul durchgeführt wird.

4. Gerät zum Durchführen des Verfahrens nach Anspruch 1, mit:
Adreßdaten-Erfassungskomparatoren (15, 17) zur Erfassung eines bestimmten Adreß- und/oder Status- und/oder Datensignals oder eines Ereignisses, in welchem diese Signale innerhalb eines vorbestimmten Bereiches liegen und zum Erzeugen eines ersten Ausgangssignals nach Auftreten eines gewählten Musters von Signalen, die auf einem Emulationsbus von einem im Test befindlichen Objektsystem empfangen wurden und
einem Generator (19) für hochrangige Betriebsmittel, der auf das erste Ausgangssignal reagiert und das Auftreten von Kombinationen von von dem Adreßdaten-Erfassungsgenerator (15, 17) erfaßten Mehrfachereignissen bestimmt und der ein zweites Ausgangssignal bei Auftreten eines gewählten Musters des ersten Ausgangssignals erzeugt;
gekennzeichnet durch
dynamische Erfassungskomparatoren (13) die so programmiert werden können, daß sie Ereignisse erfassen, die dynamisch aktivierte Variable einer höheren Programmiersprache miteinschließen und die ein drittes Ausgangssignal erzeugen, wenn ein gewähltes Muster von Signalen auf dem Emulationsbus auftritt, wobei mindestens einer der dynamischen Erfassungskomparatoren (13) während der Softwareausführung im Objektsystem umprogrammiert werden kann, um ein viertes Ausgangssignal bei Auftreten eines gewählten Musters von von dem Emulationsbus empfangenen Signalen zu erzeugen, wobei das Muster einen Zugriff zu einer dynamisch aktivierten Variablen darstellt,
einen Schnellsequenz-Funktionsgenerator (31), der auf das dritte Ausgangssignal und auf Signale auf den Emulationsbus reagiert, die den Stackplatz darstellen, um den der dynamisch aktivierten Variablen zugeordneten Adressenbereich abhängig von dem Stackplatz und von vorbestimmten Offset-werten zu berechnen und mindestens einen der dynamischen Erfassungskomparatoren umprogrammiert, wobei der Schnellsequenz-Funktionsgenerator (31) auch auf das vierte Ausgangssignal reagiert und ein fünftes Ausgangssignal erzeugt;
einen Sammelspeicher (35), der Signale von dem Emulationsbus empfängt und gewählte Signale speichert; und
einen reservierten Funktionsgenerator (25), der auf das zweite und auf das fünfte Ausgangssignal reagiert, um Daten in dem Sammelspeicher zu speichern.

5. Gerät nach Anspruch 4, dadurch gekennzeichnet, daß die Adreßdaten-Erfassungskomparatoren (15, 17), die dynamischen Erfassungskomparatoren (13), der Sammelspeicher (35) und der reservierte Funktionsgenerator (25) mit dem sich im Test befindlichen Objektsystem über den Emulationsbus (12) und Dateneingabemittel (11) verbunden sind.

6. Gerät nach Anspruch 4 oder 5, dadurch gekennzeichnet, daß
- die Adreßdaten-Erfassungskomparatoren (15, 17)
- die dynamischen Erfassungskomparatoren (13),
- der Sammelspeicher (35), und
- der reservierte Funktionsgenerator (25) mit einem Mikroprozessor (39) über einen Systembus (14) verbunden sind, wobei der Mikroprozessor (39) die Parameter der durchzuführenden Messung empfängt und zum Konfigurieren der Gerätekomponenten gemäß klassifizierten Messungstypen angepaßt ist.

## Revendications

1. Procédé d'acquisition de données concernant l'exécution d'un logiciel dans un système cible en cours de test, comprenant les étapes de :
surveillance des signaux de statuts, de données et d'adresses présents sur un bus d'émulation (12) en provenance du système cible en cours de test ;
programmation de comparateurs de reconnaissance d'adresses-données (15, 17) en réponse auxdits signaux de bus d'émulation, lesdits comparateurs de reconnaissance d'adresses-données (15, 17) devant être programmés pour détecter des événements statiques, particulièrement un signal d'adresses et/ou de statuts et/ou de données ou un événement pour lequel ces signaux s'inscrivent dans une plage prédéterminée et pour produire une première sortie chaque fois que les signaux de bus d'émulation sont égaux à des valeurs sélectionnées ou qu'ils s'inscrivent dans une plage de valeurs sélectionnées ;
programmation d'un générateur de ressource de haut niveau (19) en réponse à la première sortie des comparateurs de reconnaissance d'adresses-données (15, 17), ledit générateur de ressource de haut niveau (19) pouvant être programmé pour déterminer la survenance de combinaisons d'événements multiples détectés par les comparateurs de reconnaissance d'adresses-données (15, 17) et pour produire une seconde sortie chaque fois qu'une combinaison sélectionnée d'événements multiples et de configurations de sortie correspondantes en provenance des comparateurs de reconnaissance d'adresses-données survient ;
caractérisé par les étapes suivantes :
programmation de comparateurs de reconnaissance dynamique (13) en réponse auxdits signaux de bus d'émulation, lesdits comparateurs de reconnaissance dynamique (13) pouvant être programmés pour détecter des événements qui mettent en jeu les variables activées dynamiquement d'un langage de programmation d'ordre supérieur chaque fois que les signaux de bus d'émulation sont égaux à des valeurs sélectionnées ou qu'ils s'inscrivent dans une plage de valeurs sélectionnées ;
reprogrammation des comparateurs de reconnaissance dynamique (13) pendant l'exécution du logiciel en cours de test afin de produire une quatrième sortie chaque fois que les signaux de bus d'émulation sont égaux à des valeurs sélectionnées ou qu'ils s'inscrivent dans une plage de valeurs représentant un accès à une variable activée dynamiquement, lesdites valeurs sélectionnées ou lesdites plages de valeurs étant déterminées par un générateur de fonction séquentielle rapide (31) en réponse à une troisième sortie en provenance des comparateurs de reconnaissance dynamique (13) et à des signaux présents sur le bus d'émulation représentant l'emplacement dans une pile, ledit générateur de fonction séquentielle rapide (31) calculant la plage d'adresses assignée à la variable activée dynamiquement en fonction dudit emplacement de pile et de valeurs de décalage prédéterminées et reprogrammant au moins l'un desdits comparateurs de reconnaissance dynamique avec la plage d'adresses assignée à la variable activée dynamiquement, ledit générateur de fonction séquentielle rapide (31) répondant également à ladite quatrième sortie desdits comparateurs de reconnaissance dynamique pour produire une cinquième sortie ;
validation d'un générateur de fonction dédiée (25) pour répondre à la seconde sortie en provenance du générateur de ressource de haut niveau (19) et à la cinquième sortie en provenance du générateur de fonction séquentielle rapide (31) afin de produire au moins une sortie ;
stockage des signaux de statuts, de données et d'adresses présents sur le bus d'émulation (12) dans une mémoire d'acquisition (35) en réponse au signal de sortie en provenance du générateur de fonction dédiée (25).

2. Procédé selon la revendication 1, caractérisé en ce qu'il comprend les programmes de mesures suivants basés sur un logiciel :
mesures de traces pour mettre en oeuvre une analyse de débogage de logiciel de niveau haut ; et
mesures temporelles et de comptage dont chacune est destinée à mesurer des temps passés dans chaque module de programme en cours de test ainsi que le nombre de fois où des instructions de programmes spécifiés sont exécutées.

3. Procédé selon la revendication 2, caractérisé en ce que les mesures de traces sont classifiées selon les types suivants :
mesure de module de trace pour suivre un flux de programme en capturant l'entrée et la sortie relatives à un module de programme spécifié ;
mesure de flux de données de trace pour suivre les valeurs de données au niveau des points d'entrée et de sortie d'une procédure ;
mesure d'instructions de trace pour tracer un flux d'instructions contenu à l'intérieur d'un unique module de programme ; et
mesure de variables de trace pour tracer tous les accès à des variables spécifiées pendant une exécution de programme ; et
en ce que les mesures temporelles et de comptage sont classifiées selon les types :
mesure de modules temporels pour mesurer et afficher des temps passés minimum, maximum et moyen dans un module de programme spécifié, dans laquelle le temps mesuré inclut la totalité du temps écoulé entre l'entrée du module spécifié et la sortie de ce module, y compris le temps passé dans des appels à des sous-programmes et dans des interruptions de sous-programmes; et
mesure d'instructions de comptage pour compter le nombre de fois où chaque instruction d'un module spécifié est exécutée.

4. Appareil de réalisation du procédé selon la revendication 1, comprenant :
un comparateur de reconnaissance d'adresses-données (15, 17) pour détecter un signal d'adresses et/ou de statuts et/ou de données particulier ou un événement dans lequel ces signaux s'inscrivent dans une plage prédéterminée et pour produire un premier signal de sortie suite à la survenue d'une configuration choisie de signaux reçus sur un bus d'émulation depuis un système cible en cours de test, un générateur de ressource de haut niveau (19) répondant audit premier signal de sortie pour déterminer la survenance de combinaisons d'événements multiples détectés par le générateur de reconnaissance d'adresses-données (15, 17) et pour produire un second signal de sortie suite à la survenance d'une configuration choisie dudit premier signal de sortie ;
caractérisé par :
des comparateurs de reconnaissance dynamique (13) qui peuvent être programmés pour détecter des événements qui mettent en jeu des variables activées dynamiquement d'un langage de programmation d'ordre supérieur et pour produire un troisième signal de sortie suite à la survenue d'une configuration choisie de signaux reçus sur le bus d'émulation, au moins l'un desdits comparateurs de reconnaissance dynamique (13) pouvant être programmé pendant l'exécution d'un logiciel du système cible pour produire un quatrième signal de sortie suite à la survenance d'une configuration choisie de signaux reçus sur le bus d'émulation, ladite configuration représentant un accès à une variable activée dynamiquement ;
un générateur de fonction séquentielle rapide (31) répondant audit troisième signal de sortie et à des signaux présents sur le bus d'émulation et représentant l'emplacement de pile, pour calculer la plage d'adresses assignée à la variable activée dynamiquement en fonction dudit emplacement de pile et de valeurs de décalage prédéterminées et pour reprogrammer au moins l'un desdits comparateurs de reconnaissance dynamique, ledit générateur de fonction séquentielle rapide (31) répondant également audit quatrième signal de sortie pour produire un cinquième signal de sortie ;
une mémoire d'acquisition (35) qui reçoit des signaux en provenance du bus d'émulation et qui stocke des signaux sélectionnés ; et
un générateur de fonction dédiée (25) répondant audit second signal de sortie et audit cinquième signal de sortie pour stocker des données dans ladite mémoire d'acquisition.

5. Appareil selon la revendication 4, caractérisé en ce que lesdits comparateurs de reconnaissance d'adresses-données (15, 17), lesdits comparateurs de reconnaissance dynamique (13), ladite mémoire d'acquisition (35) et ledit générateur de fonction dédiée (25) sont couplés audit système cible en cours de test via le bus d'émulation (12) et des moyens d'entrée de données (11).

6. Appareil selon la revendication 4 ou 5, caractérisé en ce que les comparateurs de reconnaissance d'adresses-données (15, 17),
les comparateurs de reconnaissance dynamique (13),
la mémoire d'acquisition (35), et
le générateur de fonction dédiée (25) sont couplés à un microprocesseur (39) via un bus système (14), ledit microprocesseur (39) qui reçoit les paramètres de la mesure qui doit être effectuée étant conçu pour configurer les composants d'appareil conformément à des types de mesures classifiées.
